# DEMANDE DE BREVET EUROPEEN

(11) **EP 3 182 338 A1**
(43) Date de publication de la demande: **21.06.2017**
(21) Numéro de dépôt: 15307011.5
(22) Date de dépôt: 15.12.2015
(51) Int. Cl.: G06K 19/077

(54) **PROCEDE DE FABRICATION D'UN DISPOSITIF COMPRENANT UN MODULE ELECTRONIQUE RADIOFREQUENCE ET UN INDICATEUR**

(71) Demandeur: GEMALTO SA, 92190 Meudon (FR)
(72) Inventeur: OTTOBON, Stéphane, 13881 GEMENOS Cedex (FR); AUDOUARD, Laurent, 13881 GEMENOS Cedex (FR)
(74) Mandataire: Milharo, Emilien

(57) **Abrégé**

L'invention concerne un procédé de fabrication dispositif comprenant un module électronique radiofréquence (1A, 1B, 1C) comportant :
- un substrat isolant (2),
- des premières (3, 4) et secondes (5, 6) plages de connexion électriques sur le substrat (2),
- une puce radiofréquence (7) connectant lesdites premières plages de connexion (3, 4),
- un indicateur lumineux (8) connectant lesdites secondes plages de connexion (5, 6).

L'invention se distingue en ce que les premières (3, 4) et secondes (5, 6) plages sont connectées ou configurées pour connecter respectivement une première (11) et seconde (12) antennes distinctes l'une de l'autre, lesdites premières plages (3, 4) étant isolées électriquement des secondes plages (5, 6).

L'invention concerne également le module et dispositif correspondant.

## Description

### Domaine de l'invention.

La présente invention concerne un procédé de fabrication d'un dispositif de communication radiofréquence comportant une puce de circuit intégré et un indicateur notamment lumineux, tel une diode électroluminescente.

Elle s'applique particulièrement à l'indication d'activité dans des dispositifs électroniques tels que des cartes à puce avec ou sans contact ou des clés USB (*Universal Serial Bus*). L'indicateur visé par l'invention est de préférence un indicateur lumineux notamment une diode électroluminescente mais peut comprendre tout autre indicateur, (sonore, vibreur...)

Plus particulièrement, l'invention concerne des dispositifs transpondeurs radiofréquences à puce de circuit intégré sans contact tels que des supports à puce sans-contact, des cartes à puce sans contact, des étiquettes électroniques d'identification, des passeports électroniques, des dispositifs à antenne. L'invention vise notamment des documents de voyage électroniques sans-contact (passeports électroniques et visas électroniques).

Ces dispositifs visés par l'invention peuvent être conformes aux spécifications de l'ICAO (acronyme de l'expression anglo-saxonne "International Civil Aviation Organization"), l'IS07816 et/ou la norme ISO/IEC 14443. Dans de tels dispositifs transpondeurs, l'antenne avec un condensateur (interne et/ou externe à une puce de circuit intégré), forment généralement un circuit résonant. Le circuit résonant peut être passif ou actif et être relié à une puce de circuit intégré radiofréquence pour communiquer des données avec un lecteur radiofréquence.

Les transpondeurs à puce radiofréquence sont utilisés dans différents domaines économiques tels que le bancaire (porte-monnaie électronique), la communication, le transport, l'identité (e-passeport, ID-carte). Dans le domaine de l'identité notamment, il est connu d'effectuer l'identification d'une personne par communication radiofréquence avec un objet électronique portable sans contact de type RFID.

### Art antérieur.

La demande de brevet EP1861813 décrit un procédé de fabrication d'un module électronique comportant au moins une puce de circuit intégré connectée à des pistes conductrices d'un support isolant et au moins une diode électroluminescente reliant ou destinée à être reliée à une antenne. Le procédé comprend une étape d'enrobage d'au moins le circuit intégré et la diode électroluminescente (LED) par une résine isolante et translucide.

### Problème technique.

De tels dispositifs ci-dessus comprenant un module de carte à puce et diode LED s'illumine lorsque la carte est dans un champ électromagnétique. La puce radiofréquence et la led sont alimentées par l'antenne de la carte radiofréquence.

Il a été constaté que la carte à puce radiofréquence ne fonctionne pas toujours selon des méthodes de fabrication économiques et souples dans la mise en oeuvre.

L'invention a pour objectif de proposer des structures de dispositifs à puce radiofréquence et indicateur qui fonctionnent correctement et qui soient de préférence aisées à fabriquer.

### Résumé de l'invention

Contrairement à la pratique générale de l'homme de l'art consistant à brancher la diode sur la même antenne que la puce radiofréquence, l'invention propose différentes configurations de dispositifs à puce radiofréquence faciles à fabriquer présentant deux antennes distinctes, une première pour la puce radiofréquence et une seconde pour la diode LED.

Les différents éléments constitutifs sont répartis de manière à faciliter la fabrication du dispositif final tout en conservant des performances suffisantes de communication.

Les différents assemblages proposés permettent tous d'avoir des antennes distinctes.

En effet, cette proposition résulte d'une déduction des inventeurs observant que la LED supplémentaire au circuit transpondeur radiofréquence, fait chuter la fréquence de résonnance de la carte. En conséquence, l'accord en fréquence étant décalé, la puce ne peut fonctionner correctement pour communiquer avec un lecteur radiofréquence. Les inventeurs ont remarqué aussi que cette LED ajoutée utilise une partie de l'énergie récupérée par l'antenne et destinée au circuit intégré ; La conséquence est que l'alimentation du circuit intégré est amoindrie et peut faire diminuer la distance de fonctionnement de la carte sans contact ou aller même jusqu'à empêcher son fonctionnement.

L'invention permet notamment de conserver des antennes standards déjà calibrées pour chaque puce. Elle permet de s'affranchir de l'influence négative d'un changement de caractéristiques électriques de la LED notamment en cas de changement de fournisseur et de modèle de LED.

Elle permet de découpler la fonctionnalité de la puce de celle de la LED. Ainsi, si la LED vient à ne plus fonctionner cela n'affecte plus le fonctionnement de la puce radiofréquence.

A cet effet, l'invention a pour objet un module électronique radiofréquence comportant un substrat isolant, des premières et secondes plages de connexion électriques sur le substrat, une puce radiofréquence connectant lesdites premières plages de connexion, un indicateur lumineux connectant lesdites secondes plages de connexion ;
Le module est caractérisé en ce que les premières et secondes plages connectent ou configurées pour interconnecter respectivement une première et seconde antennes distinctes l'une de l'autre, lesdites premières plages étant isolées électriquement des secondes plages.

Selon d'autres caractéristiques des différents modes du module :
- Les première et seconde antennes sont externes au module ;
- La première antenne, relative à la puce radiofréquence, est portée par le module et l'antenne relative à l'indicateur est externe au module ;
- La seconde antenne relative à l'indicateur est portée par le module et l'antenne relative à la puce radiofréquence est externe au module ;

L'invention concerne aussi un dispositif de communication radiofréquence comprenant un corps, au moins une première et/ou seconde antenne(s) radiofréquence(s) dans le corps et un module électronique disposé dans ou sur le corps, le module étant conforme aux modes ci-dessus.

L'invention a également pour objet un procédé de fabrication dispositif comprenant un module électronique radiofréquence ci-dessus.

Selon d'autres étapes, le procédé comprend :
- la réalisation des première et seconde antennes radiofréquences de manière à s'étendre dans le corps et à présenter chacune des extrémités d'interconnexion accessibles de l'extérieur, puis la connexion électrique des premières et secondes plages de connexion du module électronique aux extrémités correspondantes d'interconnexion de leur antenne respective ;
- Alternativement, le procédé comprend la réalisation de la première antenne radiofréquence, relative à ladite puce, de manière à s'étendre dans le corps et à présenter des extrémités d'interconnexion accessibles, puis la réalisation de la seconde antenne, relative à l'indicateur, sur le module et en reliant les secondes plages de connexion relatives à l'indicateur, puis la connexion électrique de la puce à ladite première antenne au cours de la fixation du module au corps, par connexion électrique des premières plages de connexion aux extrémités d'interconnexion de la première antenne ;
- Alternativement, le procédé comprend les étapes de réalisation de la seconde antenne radiofréquence, relative à l'indicateur, de manière à s'étendre dans le corps et à présenter des extrémités d'interconnexion accessibles de l'extérieur ; réalisation de la première antenne, relative à la puce, sur le module, en reliant les premières plages de connexion, puis connexion électrique de l'indicateur à ladite seconde antenne au cours de la fixation du module au corps, par connexion électrique desdites secondes plages de connexion aux extrémités d'interconnexion de la seconde antenne.

L'antenne de l'indicateur dans le corps peut le cas échéant servir d'antenne amplificatrice (avec une capacité associée à l'antenne de l'indicateur) du transpondeur radiofréquence sur le module pour compenser les dimensions réduites de l'antenne de transpondeur radiofréquence (de l'ordre de 11 x 8 mm² à 15 x 15 mm²). Si nécessaire, l'invention prévoit d'ajouter dans le corps du dispositif une troisième antenne amplificatrice reliée à une capacité en plus de celle reliée à l'indicateur.

### Description des figures :

- Les figures 1 - 3 illustrent des étapes de réalisation d'un dispositif constituant ou comprenant un module à puce de circuit intégré radiofréquence, selon un premier mode de mise en oeuvre l'invention ;
- Les figures 4 - 5 illustrent des étapes de réalisation d'un dispositif constituant ou comprenant un module à puce de circuit intégré radiofréquence, selon un second mode de mise en oeuvre l'invention ;
- Les figures 6 - 7 illustrent des étapes de réalisation d'un dispositif constituant ou comprenant un module à puce de circuit intégré radiofréquence, selon un troisième mode de mise en oeuvre l'invention ;
- Les figures 8-9 illustrent une utilisation d'un dispositif constituant ou comprenant un module à puce de circuit intégré radiofréquence selon l'invention, la figure 9 étant une vue agrandie extraite de la figure 8.

### Description.

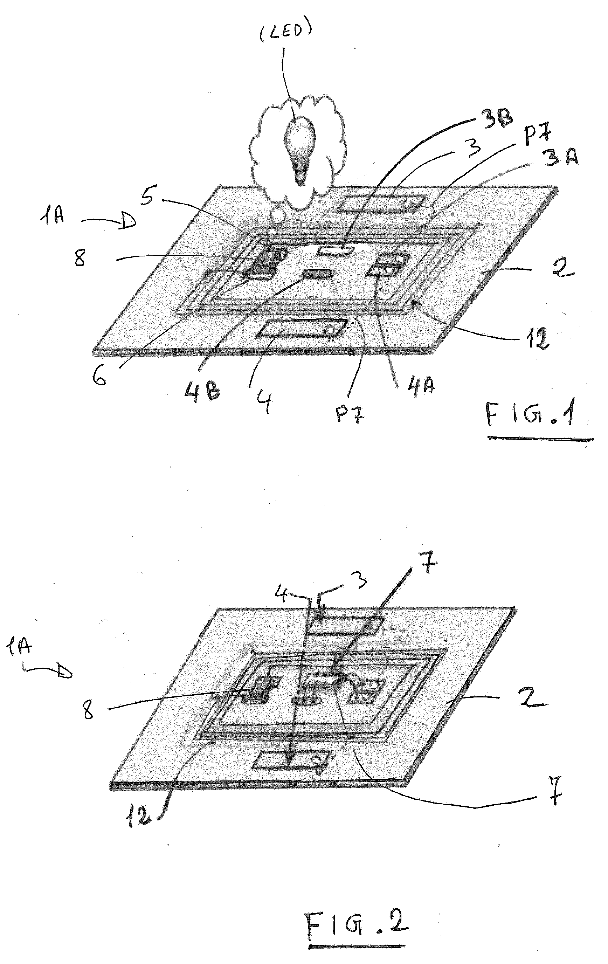

Aux figures 1 à 3, selon une première étape d'un premier mode préféré de mise en oeuvre / réalisation, le procédé réalise un module 1A à puce de circuit intégré radiofréquence ; Ce module peut constituer ou comprendre le dispositif de l'invention.

Dans l'exemple, ce module électronique radiofréquence peut être réalisé avantageusement comme un module à circuit intégré de carte à puce. Il comprend ici un substrat isolant 2 tel un film diélectrique extrait notamment d'une bobine ou ruban pour une fabrication en continu (technologie reel to reel). Il peut toutefois être réalisé autrement sur une feuille isolante.

Le module comprend (fig. 1) également des premières 3, 4 et secondes plages 5, 6 de connexion électriques sur le substrat 2. Ces plages 5, 6 sont conductrices électriquement et peuvent être réalisées par toute méthode connue notamment par gravure, dépôt de matière conductrice, jet de matière, dépôt plasma, pulvérisation sous vide ;

Le module comprend également (fig. 2) une puce radiofréquence 7 connectant les premières plages de connexion 3, 4. La connexion électrique peut être de toute nature notamment par fil soudé comme ici ou alternativement avec la puce retournée (flip-chip) et colle conductrice anisotropique, Ou encore puce avec bossages saillants (stud bump) associé à une colle isolante, brasure ; le report et connexion de la puce RF s'effectue ici comme pour un module de carte à puce.

Le module comprend également (fig. 1) un indicateur 8 d'activité (lumineux, sonore, vibreur...). Ici l'indicateur est de type lumineux par exemple sous forme de composant ou diode LED 10. Il connecte les secondes plages 5,6 de connexion ici par colle argent conductrice ou brasure, mais toute autre connexion comme pour la puce ci-dessus est possible, L'indicateur indique que le dispositif est dans un champ électromagnétique d'un lecteur (L) sans-contact de dispositif radiofréquence.

L'indicateur peut indiquer aussi que le dispositif émet de lui-même notamment parce qu'il est de type actif avec sa propre source d'énergie et génère sa propre activité, tel un champ électromagnétique pour lire ou transférer des données à un autre transpondeur radiofréquence ou effectuer un rappel d'échéance, une fonction réveil...

Selon une caractéristique générale, les premières 3, 4 et secondes plages 5, 6 connectent ou configurées pour interconnecter respectivement une première 11 et seconde 12 antennes distinctes l'une de l'autre ; les premières plages 3, 4 sont isolées électriquement des secondes plages 5, 6.

Selon une caractéristique du mode préféré, la seconde antenne 12, relative à l'indicateur 8, est réalisée sur le module 1A ; La seconde antenne 12 relie également les secondes 5, 6 plages de connexion relatives à l'indicateur.

Dans l'exemple préféré, (fig.1) la seconde antenne 12 relative à la puce radiofréquence 7 est portée par le module 1A. L'antenne 12 est réalisée de préférence en même temps que les plages conductrices 3, 4 sur le substrat 2 et selon la même technologie notamment par gravure de cuivre ou autre. Le module est ici un double face, il comporte de préférence un bornier 27 de connecteurs à contacts 28 sur la face opposée à celle portant les composants 7, 8.

Il peut comporter des pistes de redirection (non représentée) pour interconnecter des plots 3A, 4A de connexion de la puce 7 aux plages de connexion 3, 4 situées à l'extérieur de l'antenne. Les plots 3A, 4A sont placés ici dans l'exemple comme la puce c'est à dire sensiblement au centre de l'antenne (et correspondent aux plots radiofréquences (RF) LA, LB d'une puce sans-contact ou ici une puce hybride contact et sans-contact).

La puce 7 comprend également ici des connexions à travers des perforations 3B, 4B du substrat 2 pour relier le bornier 27 de contacts externes 28, 29.

Les plages de connexion 3 et 4 sont destinées à connecter électriquement l'antenne 11 qui est relative à la puce 7 et qui est externe au module 1C, comme illustré sur la figure 2 décrite ci-après.

Toutefois selon un mode non illustré, cette antenne 11 peut être disposée sur le module notamment sur la face portant le bornier, différente de la face portant l'antenne 12.

D'une manière générale pour tous les modes, l'antenne 12 reliée à l'indicateur 8 et selon les caractéristiques électriques intrinsèque du composant, peut constituer avantageusement une antenne amplificatrice de portée en plus de sa fonction d'indicateur pour le transpondeur radiofréquence comprenant la puce RF et l'antenne 11.

Le cas échéant, la valeur de capacité de la LED peut être compléter par une capacité supplémentaire (notamment composant monté en surface type CMS ou plaques).

Alternativement, une capacité est branchée en parallèle ou en série du composant de l'indicateur pour accorder en fréquence cette antenne amplificatrice combinée à un indicateur tel une diode LED.

De préférence, cette antenne amplificatrice (inductance 12, capacité sous forme de LED 8) peut être plus large (en surface couverte à l'intérieur de la spirale d'antenne) que l'antenne du transpondeur à puce RF ; L'antenne peut être placée en périphérie du bornier.

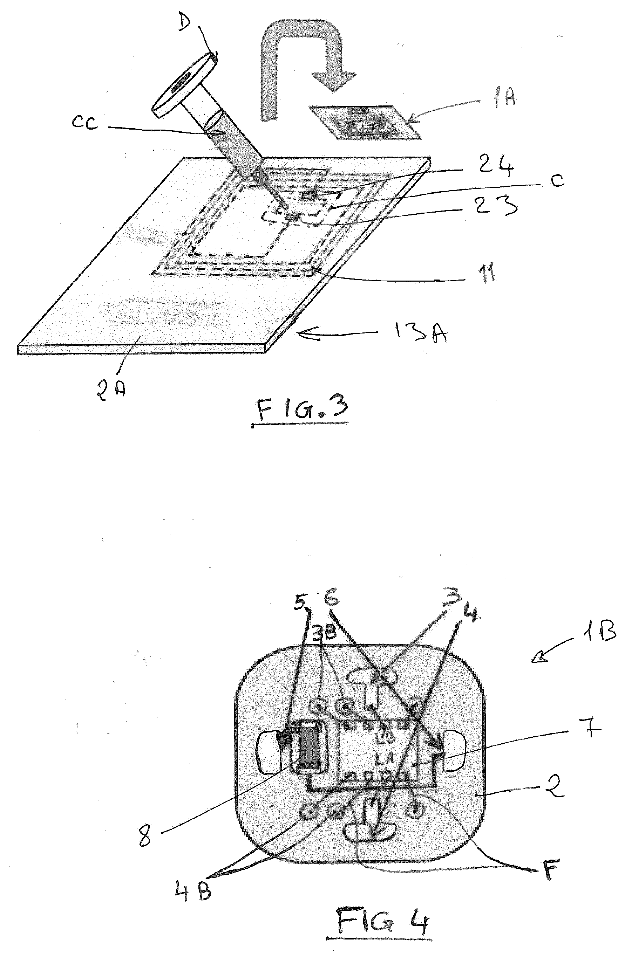

A la figure 3, est illustrée cette antenne 11 relative à la puce 7. La première antenne 11 radiofréquence est réalisée, de manière à s'étendre dans le corps (ou support ou feuille ou inlay) 13A et à présenter des extrémités 23, 24 d'interconnexion accessibles.

Dans l'exemple, cette antenne 11 est de préférence réalisée par incrustation de fil sur un support 2A ici en forme de feuille de plastique (PET, PVC, PC) mais peut être réalisée avec les mêmes méthodes utilisées pour l'antenne 12. La feuille 2A constitue ici un insert (ou inlay) destinée à être insérée dans (ou assemblée avec) d'autres feuilles.

L'assemblage résultant est destiné à constituer dans l'exemple un insert ou un corps de carte à puce ou une feuille ou une couverture de feuillet tel un passeport.

Selon une caractéristique du premier mode, on procède (figure 3) à une connexion électrique de la puce 7 à ladite première antenne 11.

Cette opération peut se faire au cours de la fixation ou report du module 1A au corps ou inlay 13A ou feuille 2A, par connexion électrique des premières plages 3, 4 de connexion aux extrémités d'interconnexion 23, 24 (ou bornes d'antenne) de la première antenne 11.

Dans l'exemple, on préfère laminer des feuilles sur l'antenne, puis usiner une cavité C de réception de module et pour révéler les bornes 23, 34 d'antenne (et les rendre accessibles) dans la cavité et le cas échéant abraser les bornes. On dépose ensuite de la colle conductrice CC avec des moyens CC connues de dépose (seringue, buse..) sur les bornes 23, 24 de la première antenne 11 avant de reporter et connecter le module.

Dans le cas, où le module ne comporte pas de bornier (la puce étant uniquement radiofréquence), le module 2 peut être reporté et connecté directement sur une feuille 2A portant l'antenne 1 ayant les bornes accessibles en surface (sans la cavité ci-dessus). Des feuilles de couverture / décoration peuvent être apportées et assemblées à cette feuille support 2A pour recouvrir l'antenne et le module.

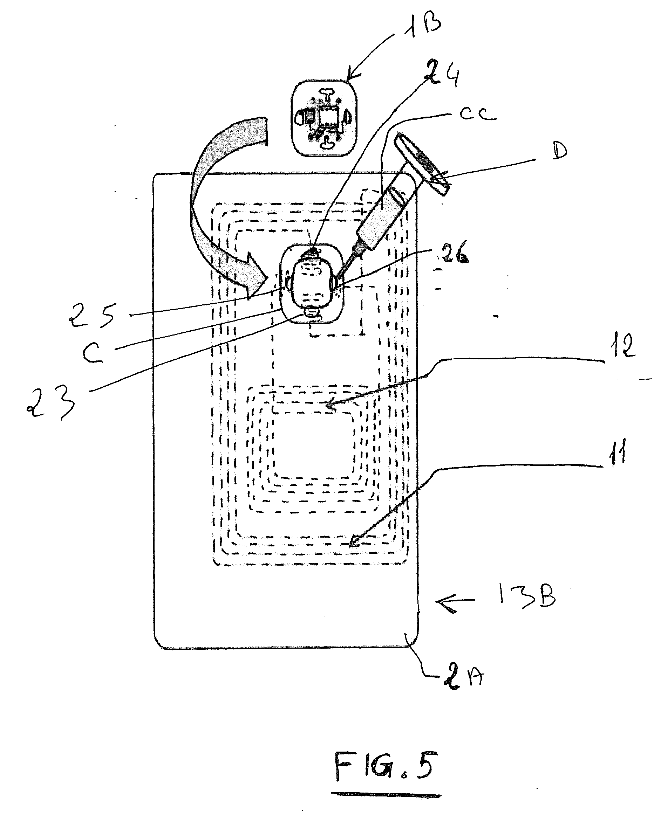

Aux figures 4 et 5, on illustre un second mode de mise en oeuvre / réalisation. Le procédé réalise comme précédemment un module 1B à puce de circuit intégré radiofréquence ; Les mêmes références représentent les mêmes éléments ou similaires.

Selon une caractéristique, (fig. 5) ce second mode met en oeuvre l'étape de réalisation des première 11 et seconde 12 antennes radiofréquences de manière à s'étendre dans le corps 13A, 13B, 13C et à présenter chacune des extrémités 23, 24, 25, 26 d'interconnexion accessibles ; Il met en oeuvre aussi l'étape de connexion électrique des premières 3, 4 et secondes 5, 6 plages de connexion du module électronique aux extrémités correspondantes 23, 24, 25, 26 d'interconnexion de leur antenne respective 11, 12.

Dans l'exemple, (fig. 4) au préalable du report et connexion aux antennes, le module 1B est réalisé sensiblement comme le module 1A des figures 1 et 2, à la différence qu'il ne comporte pas l'antenne 12 sur lui ou à son niveau. Il ne comporte pas de pistes de redirection des plages 3, 4. L'indicateur 8 relie directement ses plages 5 et 6 et la puce 7 relie directement les plages correspondantes 3, 4.

Le film 2 peut être ici un simple face si la puce est uniquement radiofréquence. Toutefois, la puce est ici une puce hybride et comporte des connexions F (passant à travers des perforations 4B du film diélectrique 2), à un bornier de contacts 27 situé sur la face opposée à celle portant les composants 7, 8.

Le module dispose donc simplement, au moins de deux composants indépendants isolés électriquement l'un de l'autre (puce RF, diode LED) et reliés chacun respectivement à une paire de plages d'interconnexion (3, 4 ou 5, 6) qui leur est spécifique et qui est isolée de l'autre paire de plages.

Ce module est particulièrement aisé à fabriqué selon la technologie carte à puce.

Ensuite, de retour à la figure 5, dans l'exemple, on réalise les première 11 et seconde 12 antennes radiofréquences avec les mêmes méthodes que celles utilisées à la figure 3 et avec sensiblement les mêmes configurations sauf que l'antenne 12 pour l'indicateur ici une diode LED, est réalisée à l'intérieur de l'antenne 11 de la puce.

Les extrémités respectives 23, 24, 25, 26 des antennes 11, 12 sont accessibles comme à la figure 3, soit en surface d'une feuille 2A, soit dans une cavité C réalisée dans des feuilles recouvrant les antennes ou corps par exemple surmoulé du dispositif.

Après un dépôt de colle conductrice CC comme précédemment sur chaque plages, le module 1B est ensuite reporté sur la feuille ou dans la cavité C à deux étages pour connecter électriquement ses premières 3, 4 et secondes 5, 6 plages de connexion respectivement aux extrémités d'interconnexion correspondantes 23, 24 et 25, 26 ou autrement après un dépôt de plots (bumps) flexibles conducteurs sur les plages 23, 24, 25, 26 du module.

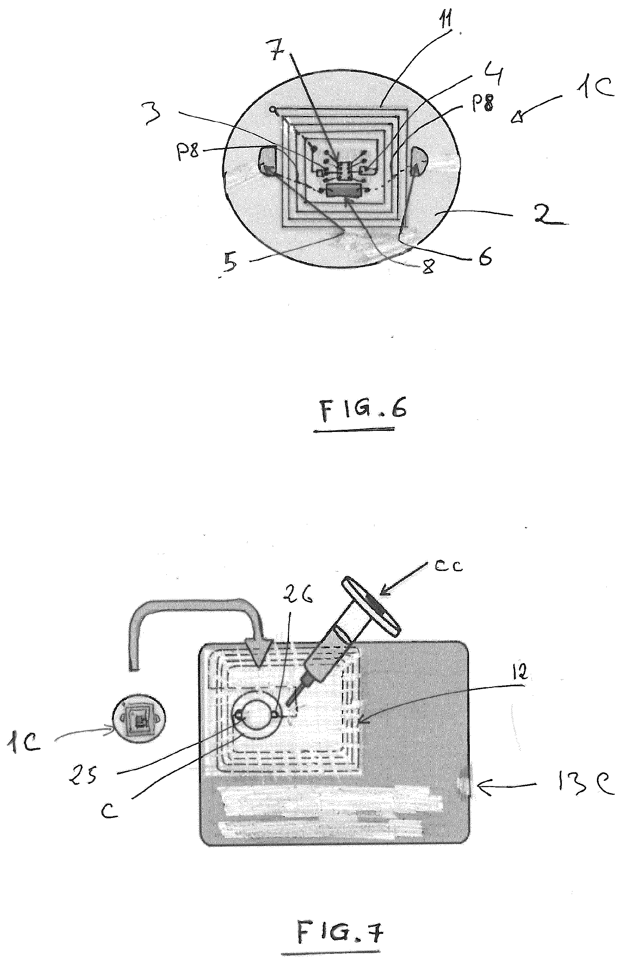

Aux figures 6 et 7, on illustre un troisième mode de mise en oeuvre / réalisation.
Selon une caractéristique, ce troisième mode prévoit de réaliser la première antenne 11, relative à la puce, sur le module 1C, en reliant les premières plages 3, 4 de connexion, relatives à la puce.

Dans l'exemple, le procédé réalise comme aux figure 1, 2 un module 1C à puce de circuit intégré radiofréquence ; Les mêmes références représentent les mêmes éléments ou similaires. Les mêmes technologies son utilisées. Le module 1C a sensiblement la même configuration que le module 1A sauf que les composants sont permutés. La puce 7 prend la place du composant indicateur 8.

La puce RF 7 est cependant toujours centrale notamment pour mieux connecter le bornier 27 de contacts éventuel. Elle connecte l'antenne 11 réalisée sur le module. L'indicateur 8 sous forme de diode LED comprend cette fois ses plages 5, 6 situé à l'extérieur de l'antenne 11 sur une première face ; L'indicateur 8 relie les plages 5, 6 par des pistes de redirection P8 passant par une face opposée à la première face (ou alternativement par un pont isolant sur les pistes d'antenne).

Ainsi, ce troisième mode prévoit (fig. 7) de réaliser la seconde antenne 12 radiofréquence, relative à l'indicateur 8, de manière à s'étendre dans le corps, insert ou feuille 13C (similaire 13A) à et à présenter des extrémités d'interconnexion 25, 26 accessibles,

Selon une caractéristique de ce troisième mode, l'invention prévoit une connexion électrique de l'indicateur 8 à ladite seconde antenne 12 au cours de la fixation du module au corps 13C, par connexion électrique desdites secondes plages 5, 6 de connexion aux extrémités d'interconnexion 25, 26 de la seconde antenne 12.

Dans l'exemple, on procède sensiblement comme pour la figure 3, à la différence que ce sont maintenant les plages 25, 26 (accessibles et éventuellement révélées dans une cavité C) qui sont préalablement recouvert de colle conductrice CC.

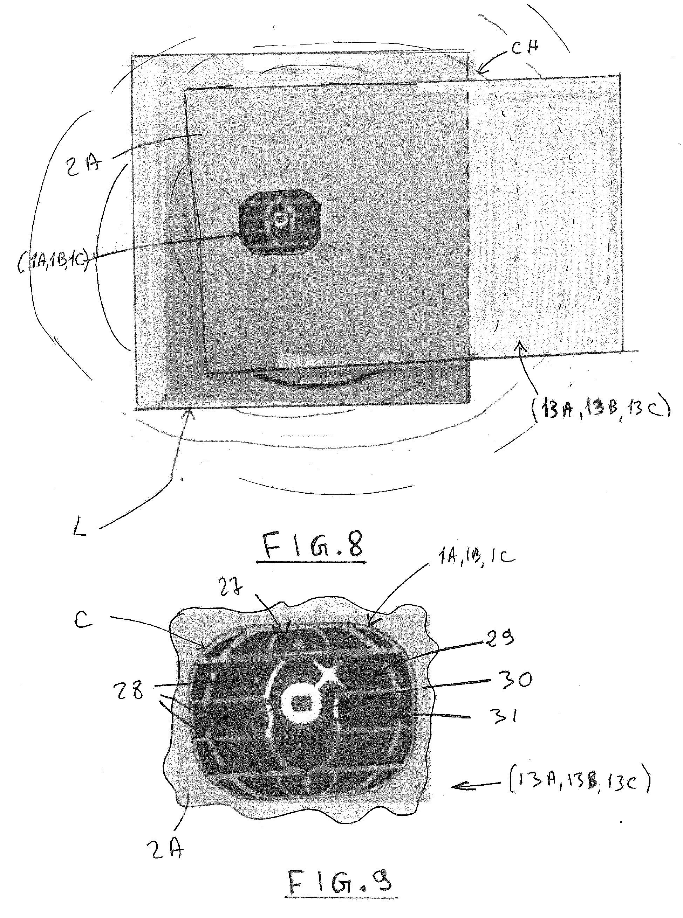

Sur les figures 8 et 9, le dispositif 13A, 13B, 13C obtenu sous forme de carte à puce radiofréquence, par l'un quelconques des trois modes, est représenté en cours d'utilisation devant un lecteur radiofréquence (L).

Le lecteur émet un champ électromagnétique (CH) en regard et à proximité de la carte.

La carte comporte un module 1A, 1B, 1C conforme à l'un des modes de réalisation reporté dans une cavité C d'un corps 2A de carte.

Le module comporte un bornier de contacts 27 avec des plages de contacts 28 affleurant en surface de la face principale du corps de carte.

Le module comporte au moins une ouverture entre 31 les contacts ou sur 30 un contact. Par exemple ici la plage 29 correspondant à la plage de masse GND comporte une ouverture représentant un logo d'entreprise ou un motif quelconque.

L'ouverture 30 est en en dehors des zones de contact normalisés par l'ISO 7816.

Le substrat 2 comporte en totalité ou au moins dans une zone située en regard de l'indicateur LED, une portion sensiblement translucide ou transparente de manière à laisser passer la lumière.

Ainsi, l'antenne 12 de l'indicateur lumineux 8 reçoit l'énergie du lecteur sous forme de champ électromagnétique CH et provoque une émission de lumière visible sur la face principale de la carte, à travers le bornier de contacts du module.

## Revendications

1. Module électronique radiofréquence (1A, 1B, 1C) comportant :
- un substrat isolant (2),
- des premières (3, 4) et secondes plages (5, 6) de connexion électriques sur le substrat,
- une puce radiofréquence (7) connectant lesdites premières plages de connexion (3, 4),
- un indicateur lumineux (8) connectant lesdites secondes plages (5,6) de connexion,
**caractérisé en ce qu'**il les premières (3,4) et secondes plages (5,6) connectent ou configurées pour interconnecter respectivement une première (11) et seconde (12) antennes distinctes l'une de l'autre, lesdites premières plages (3,4) étant isolées électriquement des secondes plages (5,6).

2. Module électronique radiofréquence (1A, 1B, 1C) selon la revendication 1, **caractérisé en ce que** lesdites première (11) et seconde (() antennes sont externes au module (1B).

3. Module électronique radiofréquence (1A, 1B, 1C) selon la revendication 1, **caractérisé en ce que** ladite première antenne (11) relative à la puce radiofréquence (7) est portée par le module (1C) et l'antenne (12) relative à l'indicateur (8) est externe au module (1C).

4. Module électronique radiofréquence (1A, 1B, 1C) selon la revendication 1, **caractérisé en ce que** ladite seconde antenne (12) relative à l'indicateur (8) est portée par le module (1A) et l'antenne relative à la puce radiofréquence (7) est externe au module.

5. Dispositif de communication radiofréquence (1) comprenant un corps (13A, 13B, 13C), au moins une première (11) et/ou seconde (12) antenne(s) radiofréquence(s) dans le corps et un module électronique (1A, 1B, 1C) disposé dans ou sur le corps (13A, 13B, 13C), ledit module (1A, 1B, 1C) étant conforme à l'une des revendications précédentes.

6. Procédé de fabrication d'un dispositif comprenant un module électronique radiofréquence (1A, 1B, 1C) comportant :
- un substrat isolant (2),
- des premières (3, 4) et secondes (5, 6) plages de connexion électriques sur le substrat (2),
- une puce radiofréquence (7) connectant lesdites premières plages de connexion (3,4),
- un indicateur lumineux (8) connectant lesdites secondes plages de connexion (5, 6),
**caractérisé en ce que** les premières (3, 4) et secondes (5, 6) plages sont connectées ou configurées pour connecter respectivement une première (11) et seconde (12) antennes distinctes l'une de l'autre, lesdites premières plages (3, 4) étant isolées électriquement des secondes plages (5, 6).

7. Procédé selon la revendication précédente, **caractérisé en ce qu'**il comprend les étapes :
- réalisation des première (11) et seconde (12) antennes radiofréquences de manière à s'étendre dans le corps (13A, 13B, 13C) et à présenter chacune des extrémités (23, 24, 25, 26) d'interconnexion accessibles,
- connexion électrique des premières (3, 4) et secondes (5, 6) plages de connexion du module électronique aux extrémités correspondantes (23, 24, 25, 26) d'interconnexion de leur antenne respective (11, 12).

8. Procédé selon la revendication 6, **caractérisé en ce qu'**il comprend les étapes :
- réalisation de la première (11) antenne radiofréquence, relative à ladite puce (7), de manière à s'étendre dans le corps (13A) et à présenter des extrémités (23, 24) d'interconnexion accessibles,
- réalisation de la seconde antenne (12), relative à l'indicateur (8), sur le module (1A) et en reliant les secondes (5, 6) plages de connexion relatives à l'indicateur,
- connexion électrique de la puce (7) à ladite première antenne (11) au cours de la fixation du module (1A) au corps (13A), par connexion électrique des premières plages (3, 4) de connexion aux extrémités (23, 24) d'interconnexion de la première antenne (11).

9. Procédé selon la revendication 6, **caractérisé en ce qu'**il comprend les étapes :
- réalisation de la seconde antenne (12) radiofréquence, relative à l'indicateur (8), de manière à s'étendre dans le corps (13C) et à présenter des extrémités d'interconnexion (25, 26) accessibles,
- réalisation de la première antenne (11), relative à la puce, sur le module (1C), en reliant les premières plages (3, 4) de connexion, relatives à la puce,
- connexion électrique de l'indicateur (8) à ladite seconde antenne (12) au cours de la fixation du module au corps (13C), par connexion électrique desdites secondes plages (5, 6) de connexion aux extrémités d'interconnexion (25, 26) de la seconde antenne (12).
